# EUROPÄISCHE PATENTSCHRIFT

(11) **EP 1 743 144 B1**
(45) Veröffentlichungstag und Bekanntmachung des Hinweises auf die Patenterteilung: **21.11.2007**
(21) Anmeldenummer: 05736487.9
(22) Anmeldetag: 11.04.2005
(51) Int. Cl.: G01G 21/24, G01G 7/04

(54) **SCHMALES, SEITLICH ANEINANDERREIHBARES WÄGESYSTEM**
NARROW WEIGHING SYSTEM CAPABLE OF BEING ARRANGED IN NARROWLY SPACED ROWS IN THE LATERAL DIRECTION
SYSTEME DE PESEE ETROIT, POUVANT ETRE ASSEMBLE DE FAÇON COMPACTE LATERALEMENT

(30) Priorität: 24.04.2004 DE 102004020145
(43) Veröffentlichungstag der Anmeldung: 17.01.2007
(73) Patentinhaber: SARTORIUS AG, 37075 Göttingen (DE)
(72) Erfinder: KUHLMANN, Otto, 37085 Göttingen (DE); FLEISCHER, Peter, 37075 Göttingen (DE)
(86) Internationale Anmeldenummer: PCT/EP2005/003772
(87) Internationale Veröffentlichungsnummer: WO 2005/106406

(56) Entgegenhaltungen:
- EP-A- 0 518 202
- EP-A- 1 195 588
- DE-A1- 10 015 311
- US-B1- 6 326 562

## Beschreibung

Die Erfindung bezieht sich auf ein Wägesystem nach dem Prinzip der elektromagnetischen Kraftkompensation mit zwei Lenkern, die als Parallelführung einen Lastaufnehmer mit einem gehäusefesten Basisbereich verbinden, und mit mindestens einem Übersetzungshebel, der am Basisbereich gelagert ist und an dessen kurzem Hebelarm über ein Koppelelement die vom Lastaufnehmer übertragene Gewichtskraft angreift und an dessen langem Hebelarm eine Spule, die in den Luftspalt eines Permanentmagnetsystems hineinragt, befestigt ist.

Wägesysteme dieser Art sind allgemein bekannt und beispielsweise in der DE 32 43 350 C2 beschrieben. Bei dem dort beschriebenem Wägesystem befindet sich der Übersetzungshebel, das Permanentmagnetsystem und die Spule im Bereich innerhalb der Parallelführung, also zwischen dem Basisbereich, dem Lastaufnehmer und den beiden Lenkern. Dieses System lässt sich zwar schmal bauen, dafür ist aber die Länge des Übersetzungshebels und der Raum für das Permanentmagnetsystem sehr eingeschränkt.

Ein entsprechendes System ist auch aus der EP 0 291 258 A2 bekannt, wobei dort auch der Aufbau aus zwei Teilbereichen, die über Abstandsstücke fest miteinander verbunden sind, beschrieben ist.

Um diesen Nachteil zu umgehen, ist es aus der EP 518 202 A1 bekannt, den Übersetzungshebel durch zwei Streben, die seitlich auf beiden Seiten neben dem Basisbereich entlang geführt sind, zu verlängern und die Spule und das Permanentmagnetsystem auf der anderen Seite des Basisbereiches - also außerhalb der Parallelführung - anzuordnen.

Ein ähnliches System ist aus der DE 10015 311 A1 bekannt. Dort ist der Übersetzungshebel auf einer Seite, und damit unsymmetrisch, neben dem Basisbereich entlang geführt.

Sollen nun mehrere Wägesysteme möglichst eng in einer Reihe seitlich nebeneinander angeordnet werden, so stören die seitlichen Streben der Übersetzungshebelverlängerung, sodass der seitliche Mindestabstand zweier Wägesysteme nicht im gewünschten Maß verkleinert werden kann. Ist der aus dem Basisbereich, den Lenkern, dem Lastaufnehmer und dem Übersetzungshebel gebildete Systemkörper z. B. 10 mm breit, sind die Streben zur Verlängerung des Übersetzungshebels 2 mm breit und benötigt man jeweils 0,5 mm seitlichen Abstand als Spiel, so kann der Abstand zweier Wägesysteme nicht kleiner als 15,5 mm gemacht werden.

Aufgabe der Erfindung ist es daher, ein Wägesystem anzugeben, das möglichst schmal gebaut werden kann und von dem mehrere in engem Abstand seitlich nebeneinander angeordnet werden können, ohne dass die Länge und die Breite des Übersetzungshebels und der Raum für das Permanentmagnetsystem stark eingeschränkt sind.

Erfindungsgemäß wird dies dadurch erreicht, dass der Basisbereich derart in zwei getrennte, im einzelnen Wägesystem nicht stabil miteinander verbundene Teilbereiche unterteilt ist und der Übersetzungshebel zwischen diesen beiden Teilbereichen hindurchgeführt ist, dass sowohl für die beiden Teilbereiche als auch für den Übersetzungshebel die volle Breite des aus dem Basisbereich, den Lenkern, dem Lastaufnehmer und dem Übersetzungshebel gebildeten Systemkörpers zur Verfügung steht, und dass zwei Wägesysteme seitlich nebeneinander angeordnet sind und ihre Basisbereiche so miteinander verbunden sind, dass die beiden Teilbereiche des Basisbereiches des jeweils einen Wägesystems erst durch die beiden Teilbereiche des Basisbereiches des jeweils anderen Wägesystems in ihrer Lage zueinander fixiert sind.

Durch die Auftrennung des Basisbereiches - in zwei Teilbereiche kann der Übersetzungshebel zwischen diesen beiden Teilbereichen hindurchgeführt werden und kann dadurch praktisch beliebig lang gemacht werden. Die unverbundenen Teilbereiche des Basisbereiches würden ein einzelnes solches Wägesystem natürlich unmöglich machen. Erst durch die Paarbildung aus zwei Wägesystemen werden die unterteilten Basisbereiche jedes Wägesystems wieder fest miteinander verbunden und fixiert. Durch die Paarbildung erfolgt diese Verbindung ohne dass die Breite des einzelnen Wägesystems steigt. Im oben angegebenen Beispiel sinkt dadurch der seitliche Mindestabstand von zwei Wägesystemen von 15,5 mm auf 10,5 mm.

In einer vorteilhaften Ausgestaltung sind die beiden Wägesysteme im Wesentlichen identisch und die Paarbildung erfolgt in der Weise, dass das eine Wägesystem um seine horizontale Mittellängsachse gedreht wird und dann mit dem anderen Wägesystem verbunden wird - beispielsweise durch Schrauben oder Kleben.

In einer vorteilhaften Weiterbildung ist auch der optische Lagensensor, bestehend aus Strahlungssender und Strahlungsempfänger, zur Regelung des Stromes durch die Spule in die Paarbildung miteinbezogen: Nur der eine Teil des Lagensensors, z. B. der Strahlungssender, ist am Basisbereich des jeweiligen Wägesystems angeordnet, während der andere Teil, z. B. der Strahlungsempfänger, am Basisbereich des jeweils anderen Wägesystems angeordnet ist.

Das Permanentmagnetsystem kann in einer anderen vorteilhaften Weiterbildung ebenfalls mit in die Paarbildung einbezogen sein: Das Permanentmagnetsystem jedes Wägesystems ist etwa so breit wie die beiden Systemkörper und jedes Wägesystem weist einen Freiraum auf, in den das Permanentmagnetsystem des jeweils anderen Wägesystems hineinragen kann. Dadurch kann das Permanentmagnetsystem jedes Wägesystems im Durchmesser deutlich größer sein, sodass eine höhere Tragkraft erreicht wird. Im oben angegebenen Zahlenbeispiel kann das Permanentmagnetsystem dadurch einen Durchmesser von bis zu 20,5 mm haben. Die Benutzung eines gemeinsamen Permanentmagnetsystems mit zwei Luftspalten ist ebenfalls möglich.

Die Erfindung wird im Folgenden anhand der schematischen Zeichnungen erläutert. Dabei zeigt:
- Figur 1: die beiden Systemkörper eines Wägesystempaares auseinander geklappt,
- Figur 2: die Systemkörper aus Figur 1 im zusammenmontierten Zustand
- Figur 3: einen Mittellängsschnitt durch ein Wägesystempaar,
- Figur 4: eine perspektivische Ansicht eines Wägesystempaares und
- Figur 5: eine perspektivische Ansicht eines Wägesystempaares mit Kapselung.

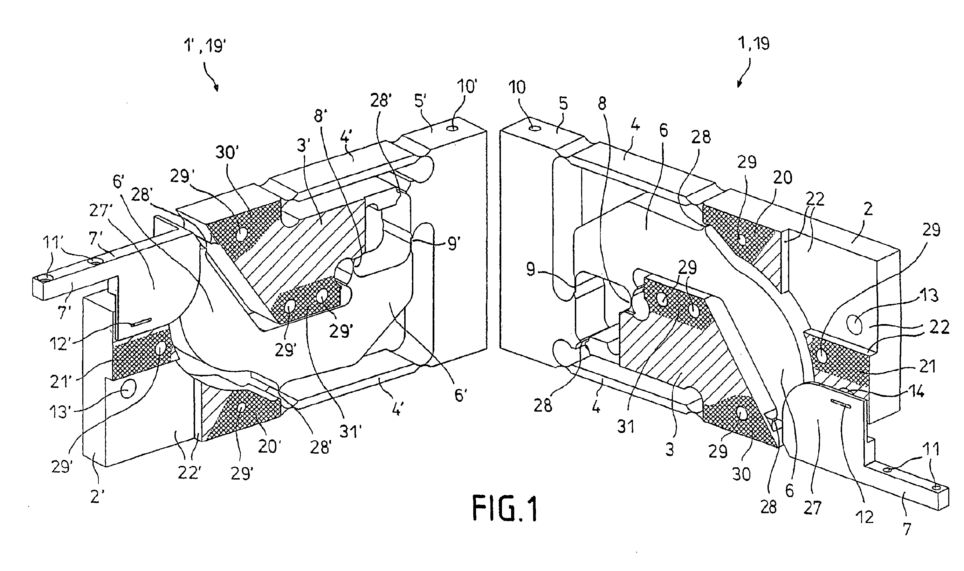

In Figur 1 sind zwei System körper 1 und 1' für zwei Wägesysteme gezeigt. Der Systemkörper 1 besteht aus einem in zwei Teilbereiche 2 und 3 unterteilten Basisbereich, zwei Lenkern 4, einem Lastaufnehmer 5 und einem Übersetzungshebel 6. Die Befestigungsstelle am Lastaufnehmer für eine nicht dargestellte Waagschale ist nur durch das Loch 10 angedeutet. Die beiden Lenker verbinden als Parallelführung den Lastaufnehmer mit dem Basisbereich. Der Übersetzungshebel ist mit der Dünnstelle 8 am Basisbereich verschwenkbar gelagert, die Übertragung der Gewichtskraft vom Lastaufnehmer auf den kürzeren Hebelarm des Übersetzungshebels erfolgt durch eine Dünnstelle 9 und am Ende 7 des längeren Hebelarms sind Befestigungslöcher 11 für eine - in Fig. 1 nicht dargestellte - Spule vorgesehen. Diese Spule befindet sich im Luftspalt eines in Fig. 1 ebenfalls nicht dargestellten Permanentmagnetsystems und erzeugt die gewichtsproportionale Gegenkraft. Der in Figur 1 dargestellte Systemkörper bildet zusammen mit der Spule und dem Permanentmagnetsystem sowie der zugehörigen Elektronik das Wägesystem. - Wägesysteme dieser Art sind in ihrer Funktion allgemein bekannt und müssen daher nicht im Detail erläutert werden.

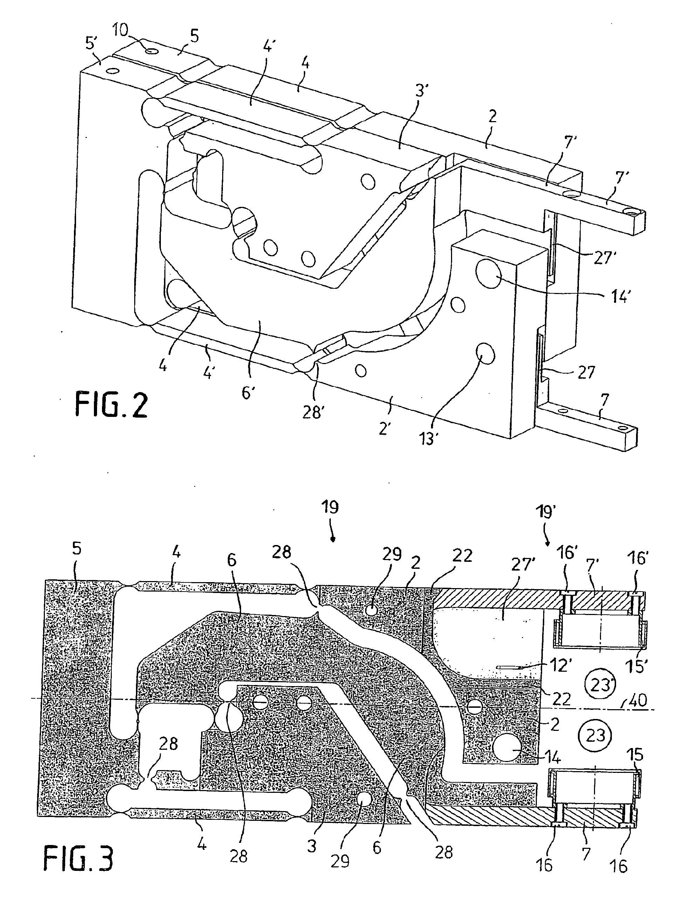

Der in Figur 1 dargestellte Systemkörper zeichnet sich nun dadurch aus, dass die beiden Teilbereiche 2 und 3 des Basisbereiches nicht miteinander verbunden sind. Es gibt also hinter dem Übersetzungshebel 6 keine in der Figur verdeckte stabile Verbindung zwischen den beiden Teilbereichen 2 und 3 ! Dadurch kann der Übersetzungshebel zwischen den beiden Teilbereichen 2 und 3 hindurchgeführt werden und beliebig lang sein; trotzdem kann der Übersetzungshebel praktisch die volle Breite des Systemkörpers aufweisen. Dadurch ist der Übersetzungshebel sehr stabil und neigt im Betrieb nicht zu störenden Eigenschwingungen. - Ein Wägesystem mit dem Systemkörper 1 ist natürlich wegen der unverbundenen Teilbereich 2 und 3 allein nicht funktionsfähig. Funktionsfähig wird das Wägesystem erst dadurch, dass zwei Wägesysteme so miteinander verbunden werden, dass die beiden Teilbereiche des Basisbereiches des jeweils einen Wägesystems die beiden Teilbereiche des Basisbereiches des jeweils anderen Wägesystems in ihrer Lage zueinander fixieren. Die in Figur 1 wie ein aufgeklapptes Buch gezeichneten Systemkörper 1 und 1' zweier Wägesysteme sind also nach der Montage wie ein zugeklapptes Buch nebeneinander angeordnet, wie es in Figur 2 dargestellt ist, und die Basisbereiche sind miteinander verbunden.

In Figur 1 und 2 sind die einzelnen Teile der beiden Systemkörper 1 und 1' mit den gleichen Bezugszahlen bezeichnet, die Teile des Systemkörpers 1' sind jeweils nur mit einem Beistrich versehen, um sie von den Teilen des Systemkörpers 1 zu unterscheiden.

In Figur 1 sind die Teilbereiche 2 und 3 sowie 2' und 3', die die volle Breite des Systemkörpers aufweisen, schraffiert dargestellt. Die anderen Bereiche sind 0,2 mm schmaler, sodass diese sich beim Zusammenbau nicht berühren und sich unabhängig voneinander bewegen können. Beim Zusammenbau der beiden Systemkörper können sich also nur die schraffierten Teile der Teilbereiche des Basisbereiches berühren. Aufgrund der Geometrie dieser Teilbereiche berühren sich in Wirklichkeit jedoch nur die kreuzschraffierten Anlageflächen: die Anlagefläche 31 liegt an der Anlagefläche 31' an, die Anlagefläche 21 liegt an der Anlagefläche 21' an, die Anlagefläche 20 liegt an der Anlagefläche 30' an und die Anlagefläche 30 liegt an der Anlagefläche 20' an. Die aneinander anliegenden Bereiche werden jeweils durch Schrauben fest miteinander verbunden, die dazugehörigen Löcher bzw. Gewindelöcher 29 bzw. 29' sind in Figur 1 erkennbar. Der Teilbereich 3' verbindet also über die Anlageflächen 30' - 20 und 31' - 31 die beiden Teilbereiche 2 und 3 des Basisbereiches des Systemkörpers 1 stabil miteinander; der Teilbereich 2' verbindet über die Anlageflächen 21' - 21 und 20' - 30 nochmals die beiden Teilbereiche 2 und 3 des Basisbereiches des Systemkörpers 1 stabil miteinander. Durch diese doppelte Verbindung bilden die beiden Teilbereiche 2 und 3 einen stabilen Basisbereich für den Systemkörper 1. In gleicher Weise verbindet der Teilbereich 3 über die Anlageflächen 30 - 20' und 31- 31' die beiden Teilbereiche 2' und 3' des Basisbereiches des Systemkörpers 1' stabil miteinander; zusätzlich verbindet der Teilbereich 2 über die Anlageflächen 21 - 21' und 20 - 30' noch einmal die beiden Teilbereiche 2' und 3' des Basisbereiches des Systemkörpers 1' stabil miteinander. - Durch die beschriebenen Verbindungen entsteht also ein Wägesystempaar, bei dem die beiden Basisbereiche 2 und 3 sowie 2' und 3' eine stabile Einheit bilden. Dadurch sind sowohl die getrennten Teilbereiche 2 und 3 des Basisbereiches des Systemkörpers 1 als auch die getrennten Teilbereiche 2' und 3' des Basisbereiches des Systemkörpers 1' zueinander fixiert und verhalten sich wie ein ungetrennter Basisbereich.

Die in Figur 1 dargestellten Systemkörper 1 und 1' sind gemäß einer vorteilhaften Ausgestaltung identische Teile. Der Systemkörper 1' ist im Vergleich zum Systemkörper 1 um 180° um eine horizontale Mittellängsachse 40 (nur in Figur 3 eingezeichnet) gedreht. Dazu muss nur bei jedem Lastaufnehmer 5 bzw. 5' sowohl auf der Oberseite als auch auf der Unterseite je ein Befestigungsloch 10 bzw. 10' zur Befestigung der Waagschale vorhanden sein. - Weiter sind in Figur 1 die Systemkörper 1 bzw. 1' jeweils einstückig aus einem Metallblock herausgearbeitet (z. B. durch Fräsen oder Drahterodieren). Durch dieses monolithische Konstruktionsprinzip lassen sich sehr reproduzierbare Wägesysteme herstellen, da keine Klemmungen, Verschraubungen etc. in der Nähe von federnden oder beweglichen Teilen notwendig sind. Damit sich ein einzelner Systemkörper überhaupt fertigen lässt, sind dünne Verbindungsstege 28 bzw. 28' vorgesehen. Diese Verbindungsstege verbinden vor allem die beiden Teilbereiche 2 und 3 bzw. 2' und 3' des Basisbereiches über den Übersetzungshebel 6 bzw. 6' hinweg und verhindern so ein Auseinanderfallen der Teilbereiche 2 und 3 bzw. 2' und 3'. Nach der Montage der beiden einzelnen Systemkörper 1 und 1' zu einem Paar ist die Stabilität durch die gegenseitige Verbindung gegeben und die Verbindungsstege können durchtrennt werden. (In allen Figuren sind die Verbindungsstege bereits durchtrennt gezeichnet.)

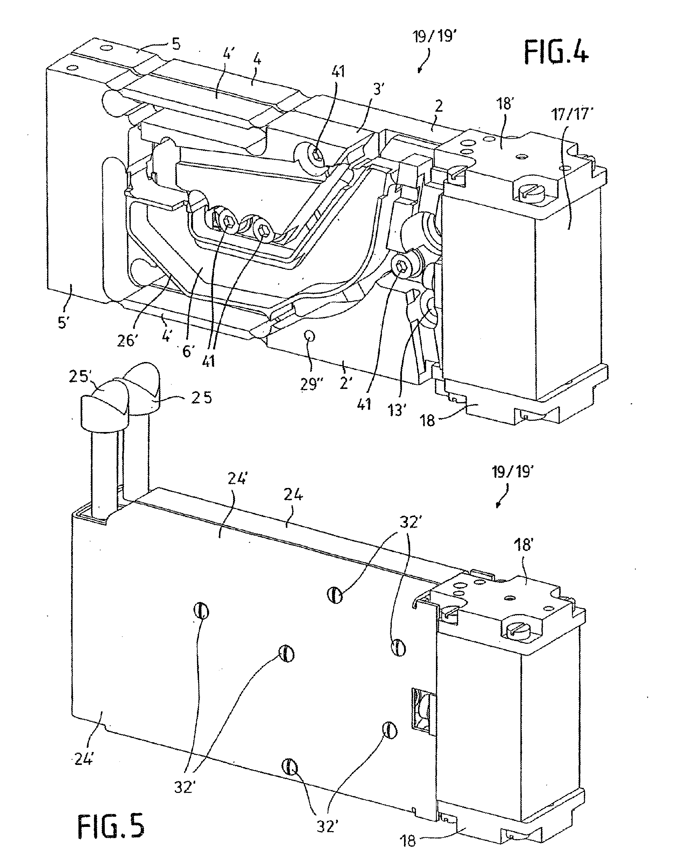

In Figur 1 ist weiter erkennbar, dass das Ende 7 des Übersetzungshebels 6 sich seitlich etwas über den Basisbereich 2/3 hinaus erstreckt. An der entsprechenden Stelle weist dann der Teilbereich 2' des Basisbereiches des (zweiten) Systemkörpers 1' einen Freiraum 22' auf, in den der überstehende Teil des Endes 7 des Übersetzungshebels hineinragen kann. In gleicher Weise kann das überstehende Ende 7' des Übersetzungshebel 6' des zweiten Systemkörpers 1' in den Freiraum 22 am Teilbereich 2 des Basisbereiches des ersten Systemkörpers 1 hineinragen. - Dadurch befinden sich die Enden 7 und 7' der Übersetzungshebel der beiden Systemkörper 1 und 1', die das Wägesystempaar bilden, genau übereinander in der vertikalen Mittelebene des Paares. Damit kann für beide Wägesysteme des Paares ein gemeinsamer Doppelmagnet eingesetzt werden, wie er weiter unten im Zusammenhang mit den Figuren 3 und 4 noch erläutert wird.

In Figur 1 und 2 ist weiter erkennbar, dass in einer vorteilhaften Weiterbildung auch der Lagensensor für die Regelung der elektromagnetischen Kraftkompensation mit in die Paarbildung einbezogen werden kann: Der Strahlungssender für das erste Wägesystem 19 befindet sich im Loch 14 im Teilbereich 2 des Basisbereiches und beleuchtet den Schlitz 12 an der Fahne 27 am hinteren Ende 7 des Übersetzungshebels 6. Der Strahlungsempfänger, der auf die durch den Schlitz hindurchtretende Strahlung anspricht, befindet sich im Loch 13' im Teilbereich 2' und damit also am Systemkörper 1' des zweiten Wägesystems. In entsprechender Weise ist der Strahlungssender für das zweite Wägesystem 19' in einem (nur in Figur 2 erkennbarem) Loch 14' im Teilbereich 2' des Basisbereiches angeordnet, die Strahlung durchsetzt den Schlitz 12' und wird von einem Strahlungsempfänger, der sich im Loch 13 befindet, detektiert.

In Figur 3 ist ein Mittellängsschnitt durch ein Wägesystempaar ohne Permanentmagnetsystem dargestellt. Außer den schon erläuterten Teilen sind in Figur 3 die beiden Spulen 15 und 15' des Wägesystempaares 19/19' dargestellt, die mittels Befestigungsschrauben 16 bzw. 16' mit den Enden 7 bzw. 7' des jeweiligen Übersetzungshebels verbunden sind. Das nicht eingezeichnete Permanentmagnetsystem für das (hintere) Wägesystem 19 befindet sich im Freiraum 23 unterhalb der horizontalen Mittellängsachse 40; das Permanentmagnetsystem für das (vordere) Wägesystem 19' befindet sich im Freiraum 23' oberhalb der horizontalen Mittellängsachse 40. Die Befestigung der Permanentmagnetsysteme kann z. B. an den angrenzenden Teilbereichen 2 und 2' des Basisbereiches erfolgen.

Man erkennt in Figur 3 noch einmal deutlich, dass die beiden Teilbereiche 2 und 3 des Basisbereiches keinerlei stabile Verbindung zueinander aufweisen. Nur während der Fertigung sind sie durch die Verbindungsstege 28 - die in Figur 3 schon als durchtrennt gezeichnet sind - miteinander verbunden. Der Verbindungssteg zwischen dem Lastaufnehmer 5 und dem Teilbereich 3 des Basisbereiches schützt die Dünnstellen der Lenker 4 vor einer zu großen Auslenkung während der Fertigung und Montage.

Weiter erkennt man in Figur 3, dass das Ende 7 des Übersetzungshebels 6 seitlich vorkragt, sodass dies Ende 7 im dargestellten Mittellängsschnitt geschnitten (= schraffiert) erscheint. Durch dieses Vorkragen ist auch das Ende 7' des Übersetzungshebels des (vorderen) Wägesystem 19' geschnitten erkennbar. Außerdem ist vom (vorderen) Wägesystem 19' die Fahne 27' mit dem Schlitz 12' erkennbar, da sie noch weiter vorkragt und in den Freiraum 22 im Teilbereich 2 des (hinteren) Wägesystems 19 hineinragt.

In Figur 4 ist eine perspektivische Ansicht eines Wägesystempaares 19/19' einschließlich Permanentmagnetsystems 17/17' gezeigt. Das Permanentmagnetsystem besteht entweder in konventioneller Weise aus zwei einzelnen Permanentmagneten, die im gezeichneten Beispiel nur einen gemeinsamen äußeren Weicheisenrückschluss aufweisen, oder aus einem einzigen, längeren Permanentmagneten, der einen oberen Luftspalt für die Spule 15' und einen unteren Luftspalt für die Spule 15 aufweist. Zur Verminderung der magnetischen Streuung in die Umgebung weist das Permanentmagnetsystem einen oberen Abschirmdeckel 18' und einen unteren Abschirmdeckel 18 auf. Das Permanentmagnetsystem ist außerdem so breit wie das komplette Wägesystempaar, also etwa doppelt so breit wie ein einzelner Systemkörper 1 bzw. 1'. Dadurch lässt sich trotz schmalem Systemkörpers eine relativ große Breite des Permanentmagnetsystems und damit eine relativ große Tragkraft erreichen. Dasselbe gilt selbstverständlich auch bei einem runden Permanentmagnetsystem, dessen Durchmesser dann so groß wie zwei einzelne Systemkörper gemacht werden kann.

Weiter ist das Wägesystempaar in Figur 4 etwas detaillierter dargestellt, sodass einige, in den Figuren 1 bis 3 der Übersichtlichkeit wegen nicht gezeichnete Einzelheiten erkennbar werden. Zum Beispiel sind die Verbindungsschrauben 41 eingezeichnet, die die beiden Systemkörper verbinden. Dort, wo die Verbindungsschrauben von der in Figur 4 sichtbaren Vorderseite her eingeschraubt sind, sind die Teilbereiche 2' und 3' des Basisbereiches in der Umgebung der Löcher 29' soweit abgesenkt, dass die Schraubenköpfe nicht überstehen. Demgegenüber ist um das in Figur 4 unten erkennbare Gewindeloch 29" herum nicht eingesenkt, da an dieser Stelle die Verbindungsschraube von der Rückseite her eingeschraubt ist und die volle Breite des Systemkörpers für die Stabilität der Gewindeverbindung erhalten bleiben soll. Für den nicht sichtbaren Kopf dieser Verbindungsschraube ist der Teilbereich 3 des Basisbereiches auf der Rückseite natürlich in entsprechender Weise eingesenkt. Außerdem erkennt man in Figur 4, dass der Übersetzungshebel 6' zum großen Teil dünner gefräst ist und nur ein umlaufender Steg 26' die volle Breite des Systemkörpers aufweist. Dadurch wird der Übersetzungshebel leichter, ohne dass die Stabilität wesentlich leidet.

In Figur 5 ist das Wägesystempaar 19/19' noch einmal komplett einschließlich je einer Waagschale 25 bzw. 25' mit prismatischer Auflagefläche - z. B. für Tabletten - und einschließlich je einem Schutzblech 24 und 24' dargestellt. Das Schutzblech 24' ist mit Schrauben 32' am Teilbereich 2' und 3' des Basisbereiches des vorderen Wägesystems festgeschraubt; das Schutzblech 24 ist entsprechend am Teilbereich 2 und 3 des Basisbereiches des hinteren Wägesystems festgeschraubt. Die Schutzbleche schützen das Wägesystempaar vor Umgebungseinflüssen.

Die Erfindung ist im Vorstehenden anhand eines bevorzugten Beispiels erläutert worden. Selbstverständlich sind viele weitere Varianten möglich. So kann z. B. zwischen dem Lastaufnehmer 5 bzw. 5' und dem Übersetzungshebel 6 bzw. 6' ein (oder auch mehrere) weitere(r) Übersetzungshebel vorgesehen sein. Die Verbindung der beiden Basisbereiche der beiden Wägesysteme zu einem Wägesystempaar kann statt durch Schrauben auch durch eine Klebeverbindung, eine Nietverbindung oder andere bekannte Verbindungsarten erfolgen. Auch ist es möglich, den ganzen Systemkörper 1 bzw. 1' in einheitlicher Dicke herzustellen und beim Zusammenmontieren zum Wägesystempaar durch Unterlegscheiben um die Löcher 29 für einen geringen Abstand der beiden Systemkörper zu sorgen, damit die Lastaufnehmer, Lenker und Übersetzungshebel der beiden Wägesysteme sich unabhängig voneinander bewegen können. Selbstverständlich ist es auch möglich - allerdings mit größerem technischen Aufwand - beide Systemkörper eines Wägesystempaares aus einem einzigen Metallblock herauszuarbeiten. Die Konturen der beiden Systemkörper werden dazu von der jeweiligen Seite her herausgefräst und die Trennung im Bereich von Lastaufnehmer, Lenker und Übersetzungshebel erfolgt durch dünne vertikale Schnitte, beispielsweise durch Drahterodieren. - Auf verschiedene Varianten bei der Magnetform wurde schon weiter oben hingewiesen.

Für die Erfindung unwesentliche Details des Wägesystempaares, wie z. B. Überlastsicherungen, Überlastanschläge, Ecklasteinstellvorrichtungen etc., sowie die komplette Elektronik wurden nicht erläutert, da sie allgemein bekannt sind.

### Bezugszeichenliste

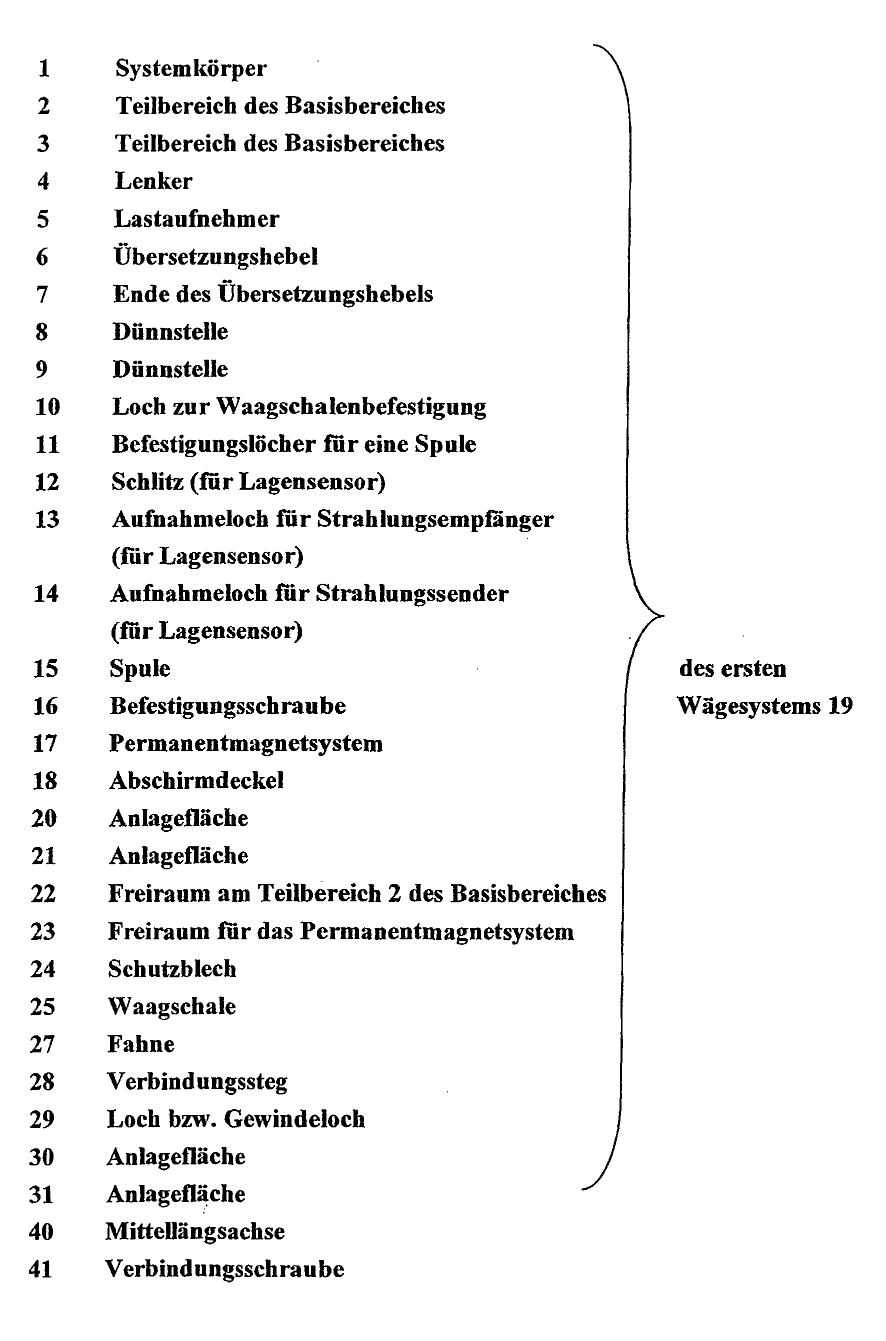

### Fortsetzung Bezugszeichenliste

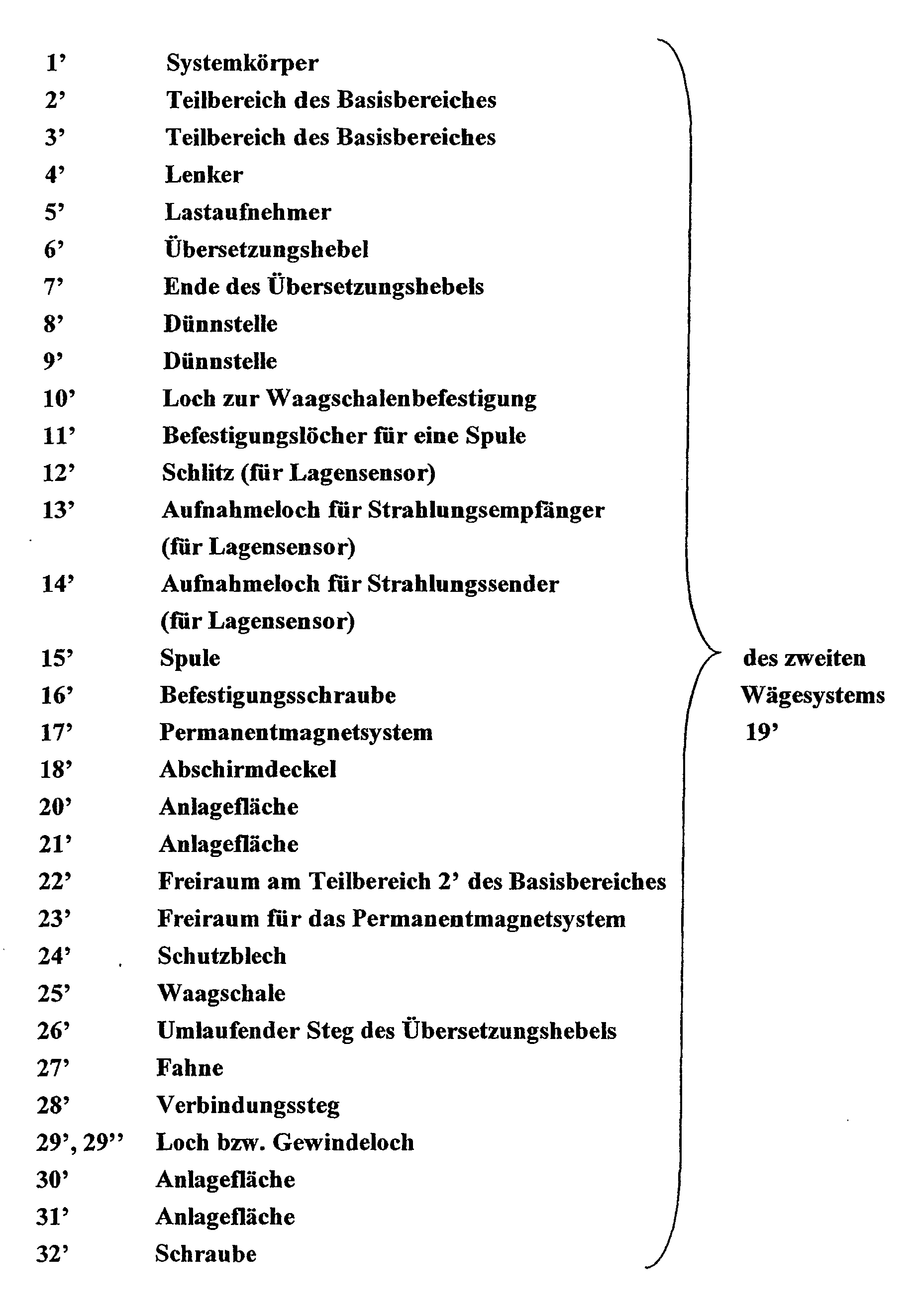

## Patentansprüche

1. Wägesystem nach dem Prinzip der elektromagnetischen Kraftkompensation mit zwei Lenkern, die als Parallelführung einen Lastaufnehmer mit einem gehäusefesten Basisbereich verbinden, und mit mindestens einem Übersetzungshebel, der am Basisbereich gelagert ist und an dessen kurzem Hebelarm über ein Koppelelement die vom Lastaufnehmer übertragene Gewichtskraft angreift und an dessen langem Hebelarm eine Spule, die in den Luftspalt eines Permanentmagnetsystems hineinragt, befestigt ist, **dadurch gekennzeichnet, dass** der Basisbereich derart in zwei getrennte, im einzelnen Wägesystem nicht miteinander verbundene Teilbereiche (2, 3) unterteilt ist und der Übersetzungshebel (6) zwischen diesen beiden Teilbereichen hindurchgeführt ist, dass sowohl für die beiden Teilbereiche (2, 3) als auch für den Übersetzungshebel (6) die volle Breite des aus dem Basisbereich, den Lenkern, dem Lastaufnehmer und dem Übersetzungshebel gebildeten Systemkörpers (1) zur Verfügung steht, und dass zwei Wägesysteme (19, 19') seitlich nebeneinander angeordnet sind und ihre Basisbereiche so miteinander verbunden sind, dass die beiden Teilbereiche (2, 3) des Basisbereiches des jeweils einen Wägesystems erst durch die beiden Teilbereiche (2', 3') des Basisbereiches des jeweils anderen Wägesystems in ihrer Lage zueinander fixiert sind.

2. Wägesystem nach Anspruch 1, **dadurch gekennzeichnet, dass** die beiden Wägesysteme (19,19') im Wesentlichen identisch ausgebildet sind und in der Weise seitlich nebeneinander angeordnet sind, dass das eine Wägesystem um seine horizontale Mittellängsachse (40) gedreht ist, sodass jeweils der obere Bereich des einen Wägesystems neben dem unteren Bereich des anderen Wägesystems zu liegen kommt.

3. Wägesystem nach Anspruch 2, **dadurch gekennzeichnet, dass** der Lastaufnehmer (5, 5') jedes Wägesystems sowohl auf seiner Oberseite als auch auf seiner Unterseite Befestigungsmöglichkeiten für eine Waagschale aufweist.

4. Wägesystem nach Anspruch 1, **dadurch gekennzeichnet, dass** der Basisbereich mit seinen beiden Teilbereichen (2, 3; 2', 3'), die Lenker (4, 4'), der Lastaufnehmer (5,5') und der/die Übersetzungshebel (6, 6') jedes Wägesystems (19, 19') einen einstückigen Systemkörper (1,1') bilden und jeweils aus einem einzigen Metallblock herausgearbeitet sind.

5. Wägesystem nach Anspruch 1, **dadurch gekennzeichnet, dass** die Verbindung der Teilbereiche (2, 3; 2', 3') der Basisbereiche der beiden Wägesysteme (19, 19') durch Schrauben (41) erfolgt.

6. Wägesystem nach **Anspruch 1, dadurch gekennzeichnet, dass die** Verbindung der Teilbereiche (2, 3; 2', 3') der Basisbereiche der beiden Wägesysteme (19, 19') durch Kleben erfolgt.

7. Wägesystem nach Anspruch 4, **dadurch gekennzeichnet, dass** die Systemkörper (1, 1') der beiden Wägesysteme (19, 19') aus einem einzigen Metallblock herausgearbeitet sind und einen gemeinsamen Basisbereich bilden.

8. Wägesystem nach Anspruch 4, **dadurch gekennzeichnet, dass** das Permanentmagnetsystem (17,17') jedes Wägesystems (19, 19') etwa so breit ist, wie zwei Systemkörper (1,1') und dass jedes Wägesystem einen Freiraum (23, 23') aufweist, in den das Permanentmagnetsystem des jeweils anderen Wägesystems hineinragen kann.

9. Wägesystem nach Anspruch 8, **dadurch gekennzeichnet, dass** die Permanentmagnetsysteme (17, 17') der beiden miteinander verbundenen Wägesysteme (19, 19') fluchtend übereinander angeordnet sind.

10. Wägesystem nach Anspruch 8, **dadurch gekennzeichnet, dass** die beiden miteinander verbundenen Wägesysteme (19, 19') ein gemeinsames Permanentmagnetsystem (17, 17') nutzen.

11. Wägesystem nach Anspruch 1 mit einem optischen Lagensensor zur Regelung des Stromes durch die Spule der elektromagnetischen Kraftkompensation, **dadurch gekennzeichnet, dass** der Strahlungssender für das jeweilige Wägesystem (19) am Basisbereich (2/3) dieses Wägesystems angeordnet ist, während der Strahlungsempfänger für das jeweilige Wägesystem am Basisbereich (2'/3') des jeweils anderen Wägesystems (19') angeordnet ist.

12. Wägesystem nach Anspruch 1 mit einem optischen Lagensensor zur Regelung des Stromes durch die Spule der elektromagnetischen Kraftkompensation, **dadurch gekennzeichnet, dass** der Strahlungsempfänger für das jeweilige Wägesystem (19) am Basisbereich (2/3) dieses Wägesystemes angeordnet ist, während der Strahlungssender für das jeweilige Wägesystem am Basisbereich (2'/3') des jeweils anderen Wägesystems (19') angeordnet ist.

13. Wägesystem nach Anspruch 1, **dadurch gekennzeichnet, dass** der Übersetzungshebel (6, 6') sich zumindest teilweise seitlich neben dem Basisbereich (2/3; 2'/3') erstreckt und dass der Basisbereich (2/3; 2'/3') einen Freiraum (22,22') aufweist, in den der überstehende Teil (7, 7') des Übersetzungshebels des daneben angeordneten zweiten Wägesystems hineinragen kann.

14. Wägesystem nach Anspruch 1, **dadurch gekennzeichnet, dass** die beiden miteinander verbundenen Wägesysteme (19,19') durch je ein Schutzblech (24, 24') gemeinsam gekapselt sind.

## Claims

1. Weighing system according to the principle of electromagnetic force compensation, with two guides, which as parallel guidance means connect a load receiver with a base region fixed relative to the housing, and with at least one translation lever, which is mounted at the base region and at the short lever arm of which the weight force transmitted by the load receiver acts by way of a coupling element and at the long lever arm of which a coil, which projects into the air gap of a permanent magnet system, is fastened, **characterised in that** the base region is subdivided in such a manner into two separate part regions (2, 3) not connected together in the individual weighing system and the translation lever (6) is led between these two part regions that the full width of the system body (1) formed by the base region, the guides, the load receiver and the translation lever is available not only for both part regions (2, 3), but also for the translation lever (6), and that two weighing systems (19, 19') are arranged laterally adjacent to one another and the base regions thereof are so connected together that the two part regions (2, 3) of the base region of a respective weighing system are fixed in their position relative to one another only by the two part regions (2', 3') of the base region of the respective other weighing system.

2. Weighing system according to claim 1, **characterised in that** two weighing systems (19, 19') are of substantially identical construction and are arranged laterally adjacent to one another in the manner that one weighing system is turned about its horizontal centre longitudinal axis (40) so that in each instance the upper region of one weighing system comes to lie near the lower region of the other weighing system.

3. Weighing system according to claim 2, **characterised in that** the load receiver (5, 5') of each weighing system has not only on its upper side, but also on its lower side, fastening possibilities for a weighing pan.

4. Weighing system according to claim 1, **characterised in that** the base region together with its two part regions (2, 3; 2', 3'), the guides (4, 4'), the load receiver (5, 5') and the translation lever or levers (6, 6') of each weighing system (19, 19') form an integral system body (1, 1') and are worked from a single metal block.

5. Weighing system according to claim 1, **characterised in that** the connection of the part regions (2, 3; 2', 3') of the base regions of the two weighing systems (19, 19') is effected by screws (41).

6. Weighing system according to claim 1, **characterised in that** the connection of the part regions (2, 3; 2', 3') of the base regions of the two weighing systems (19, 19') is effected by gluing.

7. Weighing system according to claim 4, **characterised in that** the system bodies (1, 1') of the two weighing systems (19, 19') are worked from a single metal block and form a common base region.

8. Weighing system according to claim 4, **characterised in that** the permanent magnet system (17, 17') of each weighing system (19, 19') is approximately as wide as two system bodies (1, 1') and that each weighing system has a free space (23, 23') into which the permanent magnet system of the respective other weighing system can project.

9. Weighing system according to claim 8, **characterised in that** the permanent magnet systems (17, 17') of the two interconnected weighing systems (19, 19') are arranged in alignment one above the other.

10. Weighing system according to claim 8, **characterised in that** the two interconnected weighing systems (19, 19') use a common permanent magnet system (17, 17').

11. Weighing system according to claim 1, with an optical position sensor for regulation of the current through the coil of the electromagnetic force compensation means, **characterised in that** the radiation transmitter for each weighing system (19) is arranged at the base region (2/3) of this weighing system, whereas the radiation receiver for each weighing system is arranged at the base region (2'/3') of each other weighing system (19').

12. Weighing system according to claim 1, with an optical position sensor for regulation of the current through the coil of the electromagnetic force compensation means, **characterised in that** the radiation receiver for each weighing system (19) is arranged at the base region (2/3) of this weighing system, whereas the radiation transmitter for each weighing system is arranged at the base region (2'/3') of each other weighing system (19').

13. Weighing system according to claim 1, **characterised in that** the translation lever (6, 6') extends at least in part laterally adjacent to the base region (2/3; 2'/3') and that the base region (2/3; 2'/3') has a free space (22, 22') into which the protruding part (7, 7') of the translation lever of the adjacently arranged second weighing system can project.

14. Weighing system according to claim 1, **characterised in that** the two interconnected weighing systems (19, 19') are encapsulated in common by a respective protective plate (24, 24').

## Revendications

1. Système de pesage selon le principe de la compensation de forces électromagnétique avec deux bielles qui relient en tant que guidage parallèle un récepteur de charge à la base fixée au boîtier, et avec au moins un levier de transmission qui est logé sur la base et sur le bras de levier court duquel est appliquée la force de poids transmise par le récepteur de charge, par l'intermédiaire d'un élément de couplage et sur le bras de levier long duquel est fixée une bobine qui pénètre dans l'entrefer d'un système à aimants permanents, **caractérisé en ce que** la base est divisée en deux parties (2, 3) séparées, non reliées l'une à l'autre dans le système de pesage individuel et le levier de transmission (6) est guidé au travers de ces deux parties de telle manière que pour les deux parties (2, 3) ainsi que pour le levier de transmission (6), la largeur complète du corps du système (1) formé de la base, des bielles, du récepteur de charge et du levier de transmission se tient à disposition, et **en ce que** deux systèmes de pesage (19, 19') sont disposés latéralement l'un à côté de l'autre et leurs bases sont reliées l'une à l'autre de telle manière que les deux parties (2, 3) de la base de l'un des systèmes de pesage ne soient fixées dans leur position l'une par rapport à l'autre que par les deux parties (2', 3') de la base de l'autre système de pesage.

2. Système de pesage selon la revendication 1, **caractérisé en ce que** les deux systèmes de pesage (19, 19') sont formés essentiellement de manière identique et sont disposés latéralement l'un à côté de l'autre de telle manière qu'un système de pesage soit pivoté autour de son axe longitudinal médian horizontal (40) de sorte que la zone supérieure d'un système de pesage vienne se positionner à côté de la zone inférieure de l'autre système de pesage.

3. Système de pesage selon la revendication 2, **caractérisé en ce que** le récepteur de charge (5, 5') de chaque système de pesage présente sur sa face supérieure ainsi que sur sa face inférieure, des possibilités de fixation destinées à un plateau.

4. Système de pesage selon la revendication 1, **caractérisé en ce que** la base avec ses deux parties (2, 3 ; 2', 3)', les bielles (4, 4'), le récepteur de charge (5, 5') et le/les leviers de transmission (6, 6) de chaque système de pesage (19, 19)' forment un corps de système (1, 1') d'un seul tenant et sont ébauchés chacun dans un seul bloc de métal.

5. Système de pesage selon la revendication 1, **caractérisé en ce que** le raccordement des parties (2, 3 ; 2', 3') des bases des deux systèmes de pesage (19, 19') est effectué par des vis (41).

6. Système de pesage selon la revendication 1, **caractérisé en ce que** le raccordement des parties (2, 3 ; 2', 3)' des bases des deux systèmes de pesage (19, 19') est effectué par de la colle.

7. Système de pesage selon la revendication 4, **caractérisé en ce que** le corps de système (1, 1') des deux systèmes de pesage (19, 19') sont ébauchés dans un seul bloc de métal et forment une base commune.

8. Système de pesage selon la revendication 4, **caractérisé en ce que** le système à aimants permanents (17, 17)' de chaque système de pesage (19, 19') est à peu près aussi large que deux corps de système (1, l') et **en ce que** chaque système de pesage présente un espace libre (23, 23') dans lequel le système à aimants permanents de l'autre système de pesage peut pénétrer.

9. Système de pesage selon la revendication 8, **caractérisé en ce que** les systèmes à aimants permanents (17, 17') des deux systèmes de pesage (19, 19') reliés l'un à l'autre sont disposés en alignement l'un sur l'autre.

10. Système de pesage selon la revendication 8, **caractérisé en ce que** les deux systèmes de pesage (19, 19)' reliés l'un à l'autre utilisent un système à aimants permanents commun (17, 17)'.

11. Système de pesage selon la revendication 1 avec un capteur de position optique destiné à réguler le courant traversant la bobine de la compensation de forces électromagnétique, **caractérisé en ce que** l'émetteur de rayonnement pour le système de pesage (19) est disposé sur la base (2/3) de ce système de pesage alors que le récepteur de rayonnement pour le système de pesage est disposé sur la base (2'/3') de l'autre système de pesage (19').

12. Système de pesage selon la revendication 1 avec un capteur de position optique destiné à réguler le courant traversant la bobine de la compensation de forces électromagnétique, **caractérisé en ce que** le récepteur de rayonnement pour le système de pesage (19) est disposé sur la base (2/3) de ce système de pesage alors que l'émetteur de rayonnement pour le système de pesage est disposé sur la base (2'/3') de l'autre système de pesage (19').

13. Système de pesage selon la revendication 1, **caractérisé en ce que** le levier de transmission (6,6') s'étend au moins en partie latéralement à côté de la base (2/3 ; 2'/3') et **en ce que** la base (2/3 ; 2',3') présente un espace libre (22, 22'), dans lequel la partie saillante (7, 7') du levier de transmission du second système de pesage disposé à côté peut pénétrer.

14. Système de pesage selon la revendication 1, **caractérisé en ce que** les deux systèmes de pesage (19, 19') reliés l'un à l'autre sont empaquetés ensemble par une tôle de protection (24,24').
